# EUROPEAN PATENT APPLICATION

(11) **EP 0 923 872 A2**
(43) Date of publication of application: **23.06.1999**
(21) Application number: 98650083.3
(22) Date of filing: 08.12.1998
(51) Int. Cl.: A23B 4/023, A23L 1/314

(54) **A method and apparatus for producing cooked bacon slices**

(30) Priority: 09.12.1997 IE 970866
(71) Applicant: Mozemo Limited, Naas, County Kildare (IE)
(72) Inventor: Queally, Peter, Kill, County Waterfor (IE); Queally, John, Fenor, County Waterford (IE); Murrin, Laurence, Dublin 9 (IE)
(74) Representative: O'Brien, John Augustine

(57) **Abstract**

Cooked bacon slices are produced substantially continuously by slicing raw pork bellies at a temperature of typically -1°C to form slices of raw pork which are laid flat on an openwork mesh belt 4. Upper and lower spray heads 33, 34 apply a curing solution onto top and underneath faces of the slices 3 on the conveyor 4. The conveyor 4 delivers the raw pork slices 3 with the curing solution applied to a continuous cooker 6 in which the slices 3 are cooked at about 275°C for about 2 minutes. The cooked bacon slices are thus produced substantially continuously to a high quality and with reduced labour input.

## Description

### Introduction

The invention relates to a method and an apparatus for producing cooked bacon slices.

Bacon slices are conventionally produced by first tempering frozen pork bellies to a temperature of about 4°C. A curing solution is then injected into the pork using a multineedle injector. The pork is massaged to promote the distribution of the curing solution and the massaged bellies are left overnight to cure. After curing, the bellies are put into moulds and tempered to typically - 8°C. The cured bellies are drawn from stock when required, sliced, cooked and frozen.

This process is not only labour intensive and expensive but can also result in product quality difficulties. One of the essential ingredients of the curing formulation is common salt, sodium chloride. In the conventional process, after the salt is introduced into the pork, the bacon may be stored for several weeks before use. However, as salt is a strong pro-oxidant the bacon can become rancid in storage. For this reason, bacon prepared in the conventional manner has a relatively short lift span. In addition, the presence of salt results in ice crystals which cause problems on slicing the bacon as a clean cut is difficult to achieve due to tearing in the region where the ice crystals are broken. This leads to slices with an inferior surface. In addition, the useful life of the cutting blade used on slicing is shortened.

There is therefore a need for an improved method and apparatus for producing cooked bacon slices which will overcome at least some of these difficulties.

### Statements of Invention

According to the invention there is provided a method for producing cooked bacon slices substantially continuously comprising the steps of:-
slicing raw pork bellies to form slices;
laying the raw slices flat on a support;
applying a curing liquid onto the raw pork slices on the support;
leading the cured bacon slices to a cooker; and
continuously cooking the raw slices with the curing liquid applied.

Preferably the curing liquid is applied onto both faces of the raw slices. Most preferably the curing liquid is applied by spraying the liquid onto the slices.

In a preferred embodiment of the invention the support is a conveyor on which the raw slices are laid flat for leading the slices to the cooker. Preferably the conveyor has an openwork support surface to facilitate application of the curing liquid to both flat faces of the raw slices. Ideally the openwork support of the conveyor is a mesh belting.

In a preferred embodiment of the invention cooking is commenced within 30 seconds of applying the curing liquid. Most preferably cooking is commenced within 15 seconds of applying the curing liquid. In one embodiment of the invention the raw slices are cooked at a temperature of from 270° to 280° C for a period of from 1 to 5 minutes, preferably at a temperature of approximately 275°C for a period of approximately 2 minutes.

Preferably the raw pork bellies are sliced to a thickness of from 1 to 6 mm, most preferably to a thickness of from 1.5 to 2 mm.

In one embodiment of the invention the method includes the steps of collecting excess curing liquid not taken up by the raw slices, on application and recycling the collected curing liquid.

In a preferred embodiment of the invention the curing liquid is applied to the pork slices at a rate to achieve an uptake of approximately 10% by weight of the pork slices. Ideally the curing liquid is applied at a rate of approximately 10 litres per 100 kg of meat.

In one arrangement the method includes the step, after cooking, of dicing the cooked cured slices to a desired size. Typically the method includes the step, after cooking, of freezing the cooked bacon slices.

In one embodiment of the invention the curing liquid comprises a mixture of sodium chloride and sodium nitrite. Preferably the curing liquid includes smoke flavour.

Typically the curing liquid comprises:
approximately 20 wt % of sodium chloride
approximately 600 ppm of sodium nitrite; and
approximately 3% of liquid smoke flavour

The invention also proves an apparatus for producing cooked bacon slices comprising;
a slicer for slicing raw pork bellies to form slices
application means for applying a curing liquid on the raw pork slices;
means for leading the cured slices to a cooker; and
a cooker for substantially continuously cooking the raw slices with the curing liquid applied.

Most preferably the means for leading the cured slices to the cooker comprises a conveyor. Preferably the conveyor has an openwork support belting, ideally a mesh belting.

In one embodiment of the invention the application means comprises a spray means for spraying the curing liquid onto the raw pork slices. Preferably the spray means comprises upper and lower spray heads for applying curing liquid to both faces of the raw pork slices supported on the conveyor.

Most preferably the apparatus includes a tray for collecting excess curing liquid not taken up on application to the raw pork slices. In this case preferably there is a recycling pump for recycling excess curing liquid collected in the tray to the application means.

In one embodiment of the invention the upper spray means comprises at least two spray heads spaced-apart above the conveyor for applying overlapping sprays of curing liquid onto the raw pork slices.

Preferably the lower spray means comprises at least two spray heads spaced-apart below the conveyor for applying overlapping sprays of curing liquid onto the under face of the raw pork slices. Ideally the lower spray means comprises three spray heads spaced apart below the conveyor for applying overlapping sprays of curing liquid onto the raw pork slices.

The apparatus also preferably includes valve means for controlling the flow of curing liquid to the application means.

### Brief Description of the Drawings

The invention will be more clearly understood from the following description therefore given by any of example only with reference to the accompanying drawings in which:-
Fig. 1 is a perspective view of apparatus for producing cooked bacon slices according to the invention;
Fig. 2 is an end view of an applicator means of the apparatus of Fig. 1;

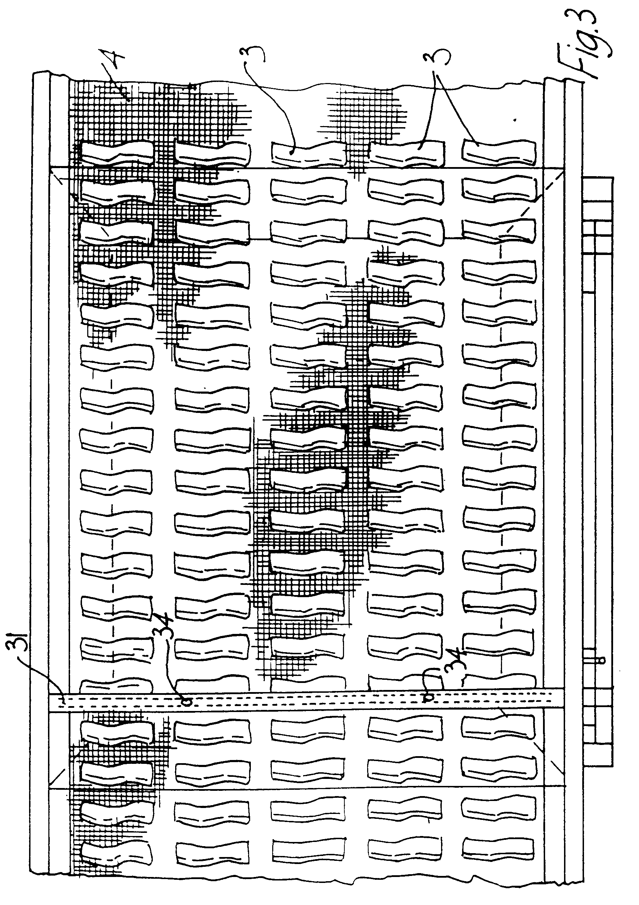

Fig. 3 is a plan view of a conveyor part of the apparatus;
Fig. 4 is perspective view of the applicator means;
Fig. 5 is an end view of the applicator means; and
Fig. 6 is a perspective, partially exploded view of the applicator means;

### Detailed Description

Referring to the drawings there is illustrated an apparatus and method for producing cooked bacon slices substantially continuously. The apparatus comprises a slicer 1 for slicing raw pork bellies at a temperature of typically - 1°C to form slices 3 of raw pork which are laid flat on a support provided by a conveyor in the form of an openwork mesh belt 4. The slices are sliced to a thickness of from 1 to 6 mm, preferably 1.5 to 2 mm. The conveyor belt 4 delivers the raw pork slices 3 to an applicator means 5 which applies a curing solution to both flat faces of the slices 3 on the belt 4.

The conveyor belt 4 then delivers the raw pork slices 3, with the curing solution applied, to a continuous cooker 6 in which the pork slices 3 are cooked at a temperature of from 270°C to 280°C, preferably 275°C for a period of from 1 to 5, most preferably approximately 2 mins. To optimise the slicing, curing and cooking, process cooking is commenced within 30, and most preferably within about 15 seconds of the application of the curing liquid. After cooking, the cooked cured slices may be diced to a desired size prior to freezing.

The curing solution applied is in this case a mixture of approximately 20 wt% of sodium chloride, approximately 600 ppm of sodium nitrate, and a smoke flavour, typically 3 wt% of liquid smoke flavour. The smoke flavour may be a mixture of smoke flavour such as a 2:1 ratio of flavour types LFDN and P50 available from Red Arrow.

The curing solution is applied at a rate to achieve an uptake of approximately 10% by weight of the pork slices corresponding to an application rate of 10 litres per 100 kg of meat.

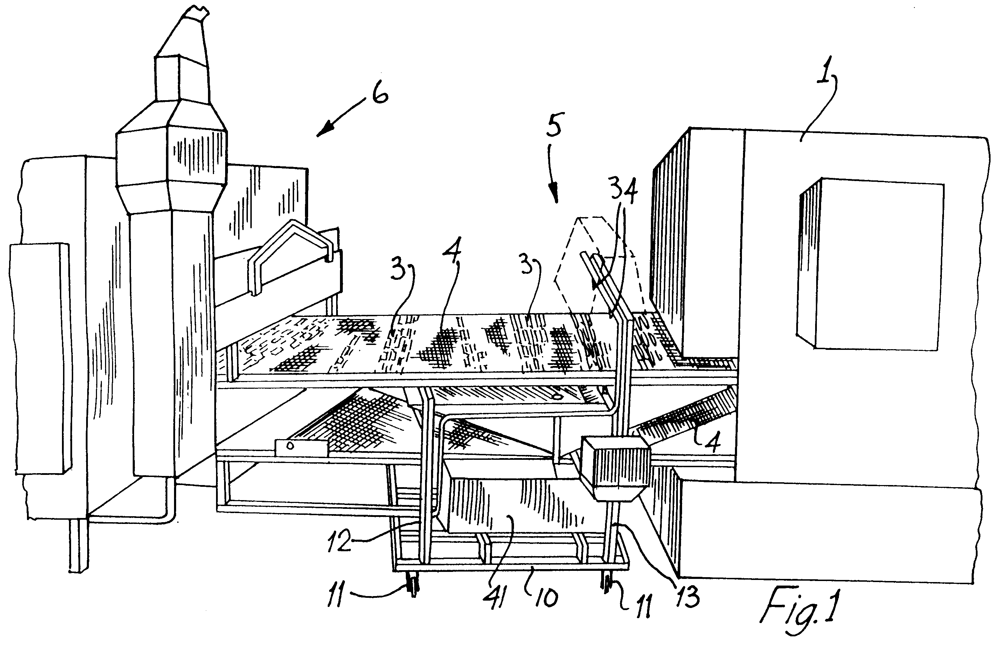

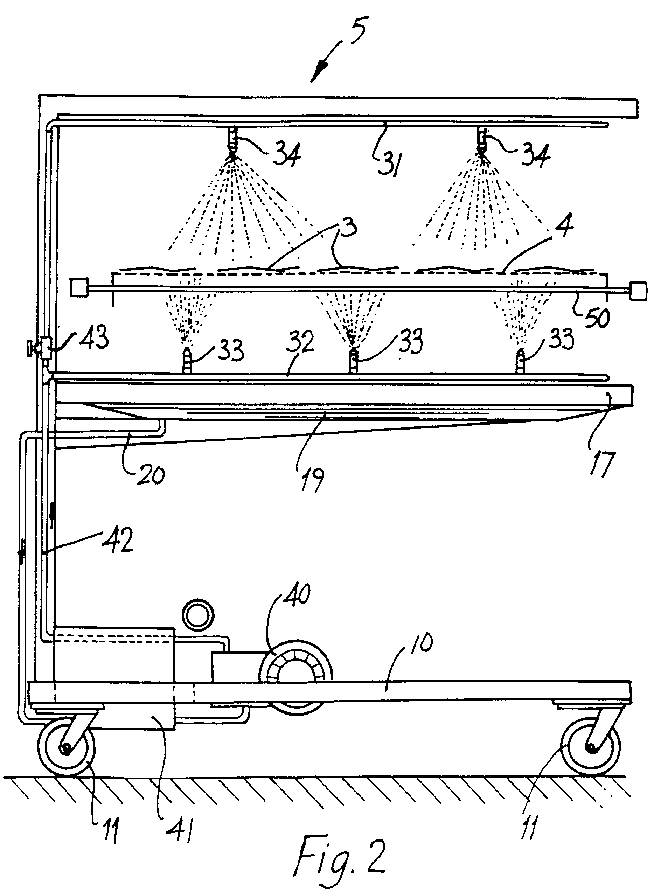

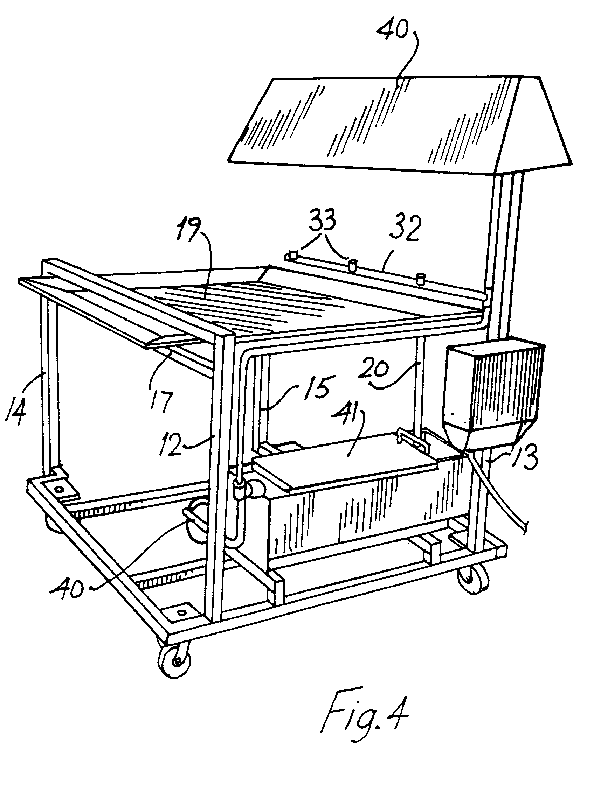

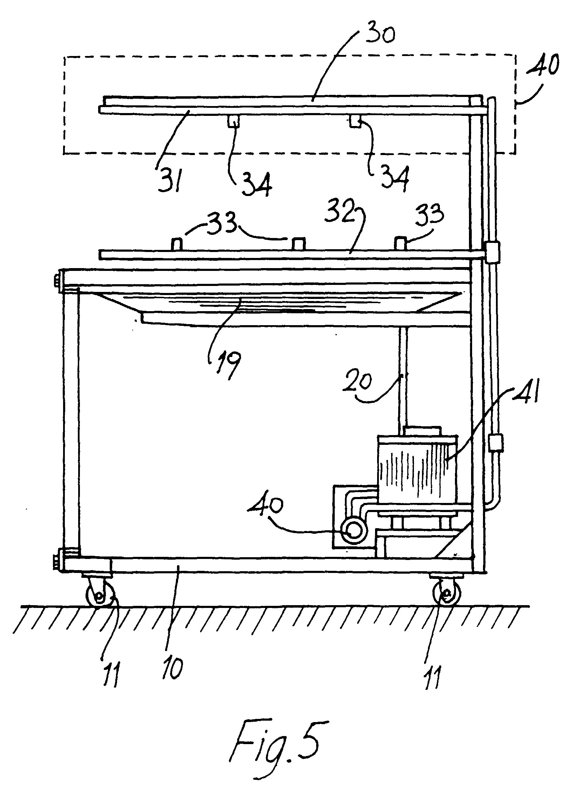

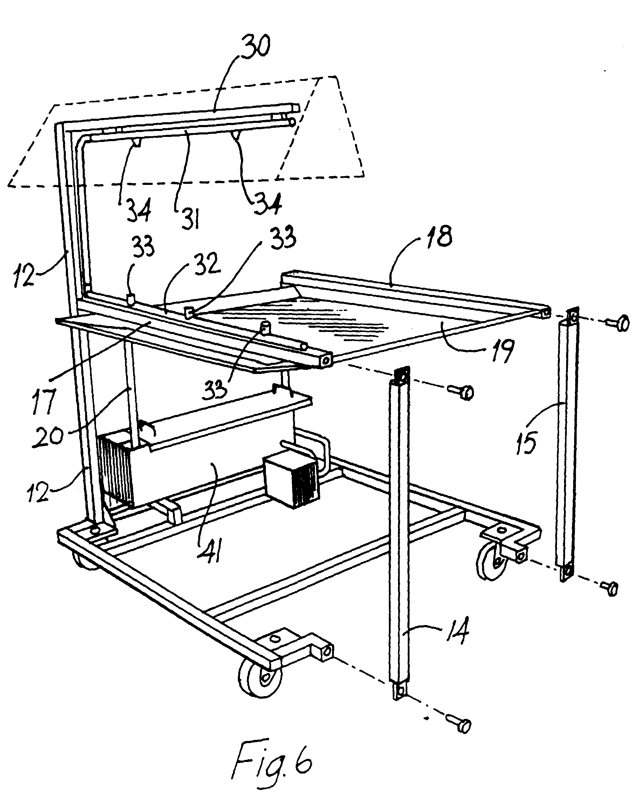

The curing solution is applied using the applicator 5 which is shown in detail in Figs. 2, and 4 to 6. The applicator 5 comprises a chassis 10 fitted with wheels. Four support legs 12, 13, 14, 15 extend upwardly from the chassis 10. For ease of moving the applicator into and out of the in-line position illustrated in Fig. 1 one pair 14, 15 of the support legs are movable as illustrated in Fig. 6 for pushing the applicator into the in-line position of Fig. 1 and are readily bolted back into the support position. Cross members 17, 18 extend between the legs 12, 14 and 13 and 15 and these support an excess curing liquid collection tray 19 having an outlet pipe 20 for delivery of collected curing liquid to a supply tank 41.

The support leg 12 extends upwardly and an upper cross member 30 extends outwardly therefrom and supports an upper spray bar 31. A lower spray bar 32 is supported on the cross member 17.

Referring particularly to Fig. 2 it will be noted that in this case the lower spray bar 32 is fitted with three lower spray heads 33 to deliver a spray of curing liquid to the underface of the pork slices 3 on the mesh belt 4. The lower spray heads 33 are spaced-apart to deliver an even spray of curing liquid to the lower face of the pork slices 3 on the belt 4. Similarly, the upper spray bar 31 is fitted with two spray heads 34 which are positioned to deliver an even spray of curing liquid to the upper face of the slices 3 on the mesh belt 4. Excess curing solution which is not taken up by the pork slices 3 is collected by the recycle tray 19. In this way an even spread of curing liquid is applied to both the top and underneath faces of the slices 3. A cowl 40 is provided above the upper spray bar 31 to direct any mist rising from the sprays downwardly onto the slices 3 on the conveyor 4.

The curing liquid is supplied to the spray bars 31, 32 by a pump which delivers the liquid from a supply tank 41 along a supply line 42. The supply line 42 is fitted with a valve 43 which may be used to regulate the flow of liquid and hence the rate of application of the curing liquid onto the slices 3. The flow of curing liquid from the lower spray heads 33 may be further regulated by a restrictor 50.

The method of producing cooked bacon slices according to the invention offers very considerable advantages. The method allows cooked bacon slices to be produced highly efficiently, substantially continuously and with a high level of quality and reduced labour. As the pork slices do not come into contact with the curing liquid until just before cooking there is no possibility of the pro-oxidant properties of the salt in the curing solution developing. Thus, the shelf life of the product is extended as rancidity is avoided.

The invention is not limited to the embodiments hereinbefore described which may be varied in both construction and detail.

## Claims

**1.** A method for producing cooked bacon slices substantially continuously comprising the steps of:-
slicing raw pork bellies to form slices (3);
laying the raw slices flat on a support (4);
applying a curing liquid onto the raw pork slices (3) on the support (4);
leading the cured bacon slices to a cooker (6); and
continuously cooking the raw slices (3) with the curing liquid applied.

**2.** A method as claimed in claim 1 wherein the curing liquid is applied onto both faces of the raw slices (3).

**3.** A method as claimed in claim 1 or 2 wherein the curing liquid is applied by spraying the liquid onto the slices (3).

**3.** A method as claimed in any of claims 1 to 3 wherein the support (4) is a conveyor (4) on which the raw slices (3) are laid flat for leading the slices (3) to the cooker (6), preferably the conveyor (4) has an openwork support surface (4) to facilitate application of the curing liquid to both flat faces of the raw slices (3), preferably the openwork support of the conveyor is a mesh belting (4).

**5.** A method as claimed in any preceding claim wherein cooking is commenced within 30 seconds of applying the curing liquid, preferably cooking is commenced within 15 seconds of applying the curing liquid.

**6.** A method as claimed in any preceding claim wherein the raw slices (3) are cooked at a temperature of from 270° to 280°C for a period of from 1 to 5 minutes, preferably the raw slices are cooked at a temperature of approximately 275°C for a period of approximately 2 minutes.

**7.** A method as claimed in any preceding claim wherein the raw pork bellies are sliced to a thickness of from 1 to 6 mm, preferably the raw pork bellies are sliced to a thickness of from 1.5 to 2 mm.

**8.** A method as claimed in any preceding claims including the steps of collecting excess curing liquid not taken up by the raw slices, on application, and recycling the collected curing liquid.

**9.** A method as claimed in any preceding claim wherein the curing liquid is applied to the pork slices (3) at a rate to achieve an uptake of approximately 10% by weight of the pork slices, preferably the curing liquid is applied at a rate of approximately 10 litres per 100 kg of meat.

**10.** A method as claimed in any preceding claim including the step, after cooking, of dicing the cooked cured slices to a desired size, preferably the method includes the step, after cooking, of freezing the cooked bacon slices.

**11.** A method as claimed in any preceding claim wherein the curing liquid comprises a mixture of sodium chloride and sodium nitrite, preferably the curing liquid includes smoke flavour, ideally the curing liquid comprises:
approximately 20 wt% of sodium chloride
approximately 600 ppm of sodium nitrite; and
approximately 3% of liquid smoke flavour

**12.** Apparatus for producing cooked bacon slices comprising;
a slicer 1 for slicing raw pork bellies to form slices (3);
application means (5) for applying a curing liquid on the raw pork slices (3);
means (4) for leading the cured slices (3) to a cooker (6); and
a cooker (6) for substantially continuously cooking the raw slices (3) with the curing liquid applied.

**13.** Apparatus as claimed in claim 12 wherein the means (4) for leading the cured slices to the cooker comprises a conveyor (4), preferably the conveyor (4) has an openwork support belting 4, preferably the belting is of mesh material (4).

**14.** Apparatus as claimed in any of claim 12 or 13 wherein the application means (5) comprises a spray means (31, 32, 33, 34) for spraying the curing liquid onto the raw pork slices (3), preferably the spray means (31, 32, 33, 34) comprises upper (31, 34) and lower spray heads (32, 33) for applying curing liquid to both faces of the raw pork slices (3) supported on the conveyor (4).

**15.** Apparatus as claimed in any of claims 12 to 14 including a tray (19) for collecting excess curing liquid not taken up on application to the raw pork slices (3), preferably the apparatus includes a recycling pump for recycling excess curing liquid collected in the tray (19) to the application means (31, 32, 33, 34).

**16.** Apparatus as claimed in any of claims 12 to 15 wherein the upper spray means (31, 34) comprises at least two spray heads (34) spaced-apart above the conveyor (4) for applying overlapping sprays of curing liquid onto the raw pork slices (3).

**17.** Apparatus as claimed in any of claims 12 to 16 wherein the lower spray means (32, 33) comprises at least two spray heads (33) spaced-apart below the conveyor (4) for applying overlapping sprays of curing liquid onto the underface of the raw pork slices (3), preferably the lower spray means (32, 33) comprises three spray heads (33) spaced apart below the conveyor (4) for applying overlapping sprays of curing liquid onto the raw pork slices (3).
